# EUROPÄISCHE PATENTSCHRIFT

(11) **EP 2 337 966 B1**
(45) Veröffentlichungstag und Bekanntmachung des Hinweises auf die Patenterteilung: **13.11.2013**
(21) Anmeldenummer: 09781498.2
(22) Anmeldetag: 05.08.2009
(51) Int. Cl.: F16D 65/12

(54) **BREMSSCHEIBE**
BRAKE DISK
DISQUE DE FREIN

(30) Priorität: 17.09.2008 DE 102008042168
(43) Veröffentlichungstag der Anmeldung: 29.06.2011
(73) Patentinhaber: Robert Bosch GmbH, 70442 Stuttgart (DE)
(72) Erfinder: MUELLER, Hans-Walter, 80939 München (DE)
(86) Internationale Anmeldenummer: PCT/EP2009/060128
(87) Internationale Veröffentlichungsnummer: WO 2010/031633

(56) Entgegenhaltungen:
- WO-A-03/002885
- DE-A1- 2 644 223
- DE-A1- 4 332 951
- DE-A1-102004 048 916
- US-A- 3 587 269

## Beschreibung

### Stand der Technik

Die Erfindung betrifft eine Bremsscheibe, insbesondere belüftete Bremsscheibe, mit einem Reibring und einem über Verbindungsglieder mit dem Reibring verbundenen Tragteil, insbesondere Scheibentopf. Aus der DE 43 32 951 A1 ist eine belüftete Bremsscheibe bekannt, die einen Reibring und ein mit Verbindungsgliedern mit dem Reibring verbundenes Tragteil aufweist. Die Verbindungsglieder sind insbesondere als Stifte, Bolzen oder dergleichen ausgebildet und über den Umfang des Tragteils verteilt angeordnet. Die Verbindungsglieder ragen in Aussparungen in die Umfangswand des Reibrings. Bei größeren Bremsmomenten besteht die Gefahr, dass aufgrund der freien Länge der Verbindungsglieder, d. h. aufgrund des Abstandes zwischen Tragteil und Reibring, sich die Verbindungsglieder verbiegen können und sich im Extremfall aus ihrem Sitz lösen können. Bei dieser und auch anderen in der Praxis im Gebrauch befindlichen Bremsscheiben sind die Stifte in die Bohrung mit einer sogenannten Gleitpassung eingebracht. Dabei sind die Stifte an ihrer Oberfläche geschliffen und die Bohrungswand gerieben. Entsprechend dem verwendeten Reib- bzw. Schleifvorgang entstehen in radialer Richtung verlaufende Bearbeitungsspuren, was bedeutet, dass sie nahezu unter einem rechten Winkel zur Bewegungsrichtung des Stifts in der Bohrung ausgebildet sind. Somit können die Bearbeitungsspuren an den Oberflächen sich gegenseitig verhaken und somit die Bewegung des Stiftes in der Bohrung behindern. Da der Stift aus Edelstahl besteht und die Bremsscheibe aus Grauguss besteht, ergeben sich bei den während des Betriebs entstehenden Temperaturen unterschiedliche Ausdehnungen dieser beiden Bauteile. Dadurch kann es im Extremfall sogar vorkommen, dass der für die Gleitung vorgesehene Toleranzbereich überschritten wird, und die Stifte in der Bohrung festsitzen können. Dies würde bedeuten, dass die bei Raumtemperatur vorgesehene und eingestellte Gleitpassung sich während des Betriebs zu einer Presspassung entwickelt. Diese Behinderung der Gleitung der Stifte in den Bohrungen kann zu Verwerfungen bzw. zu Rissen im Reibring führen. Ferner könnten beim anschließenden Abkühlen der Bremsscheibe Geräusche entstehen, die durch die sich nun wieder trennenden radialen Bearbeitungsspuren hervorgerufen werden könnten. Ferner sind bei der Herstellung mehrere Bearbeitungsschritte notwendig, so muss jeweils in einem Herstellungsschritt die Wand der Bohrung gerieben und die Wand des Stiftes geschliffen werden und anschließend muss als weiterer Herstellungsschritt der Stift in die Bohrung eingeführt werden. Dadurch bauen diese Bremsscheiben in der Herstellung aufwändig und teuer.

Darüber hinaus ist eine zusammengesetzte Bremsscheibe aus der DE 10 2004 048 916 A1 bekannt, bei der eine schwimmende Verbindung zwischen einem Tragteil und einem Reibring spielfrei und in axialer Richtung beidseitig federnd vorgespannt ist.

### Vorteile der Erfindung

Die erfindungsgemäße Bremsscheibe mit den kennzeichnenden Merkmalen des Anspruchs 1 hat demgegenüber den Vorteil, dass die notwendigen Bearbeitungsvorgänge reduziert werden. Beim Einsetzen des Stifts in die Bohrung wird mit Hilfe einer Präzisionskalibrierkugel die Wandung der Bohrung gleichzeitig kalibriert. Dadurch wird nicht nur die Oberfläche der Bohrung geglättet, sondern auch mit einer gewissen Eindringtiefe die Oberfläche gehärtet. Vorher kann in einem Arbeitsvorgang der Stift mit Hilfe einer Matrize kalibriert werden. Bei der Kalibrierung der Oberfläche der Bohrung bzw. der Oberfläche des Stiftes werden keine zirkularen Strukturen, sondern höchstens axiale Strukturen, d. h. in Bewegungsrichtung des Stiftes verlaufende Strukturen, erzeugt. Dadurch können sich sowohl bei Raumtemperatur als auch bei Betriebstemperatur die Strukturen der Stifte und der Bohrungen nicht mehr gegenseitig beeinflussen. Der Toleranzbereich, der notwendig ist, um auch bei Betriebstemperatur aufgrund der thermischen Spannungen fehlerfrei bremsen zu können, kann in einfacher Weise eingestellt werden. Dies bedeutet, dass sowohl der Toleranzbereich verringert wird als auch die Herstellungskosten geringer sind. Weisen die Stifte an ihrer Stirnseite eine kalottenförmige Ausbildung auf, so kann die Kalibrierkugel mittels des Stiftes geführt durch die Bohrung gedrückt werden. Aufgrund der Kalotte kann der Anpressdruck des Stiftes auf die Kalibrierkugel auf eine größere Fläche verteilt werden, sodass eine Verformung. des Endes des Stiftes durch einen eventuell auftretenden Füge- oder Kalibrierungsdruck vermieden wird. Bei entsprechender Ausgestaltung der Länge der Bohrung kann bei einer Sacklochbohrung die Kalibrierkugel auch ohne Beeinflussung der Funktion der Bremsscheibe in der Bohrung verbleiben.

### Zeichnung

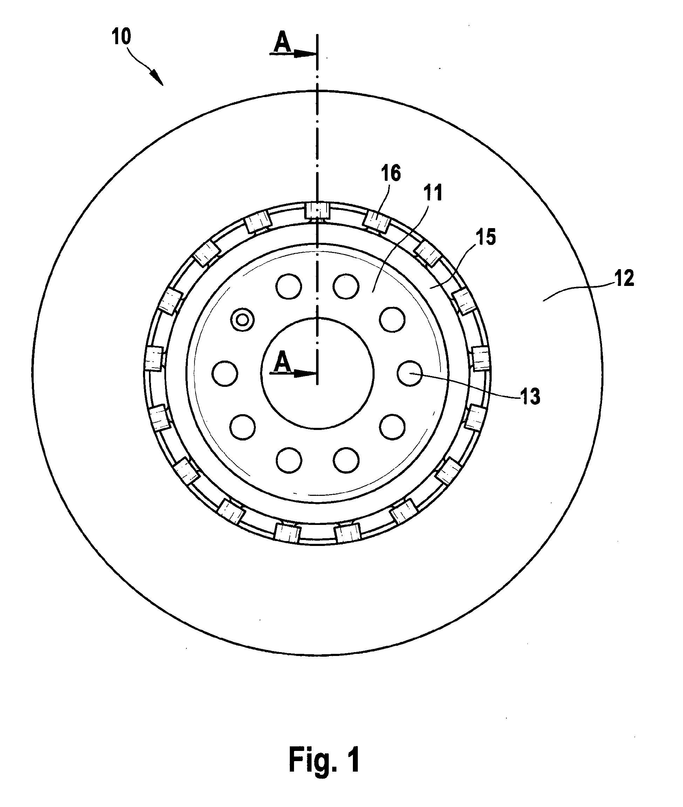

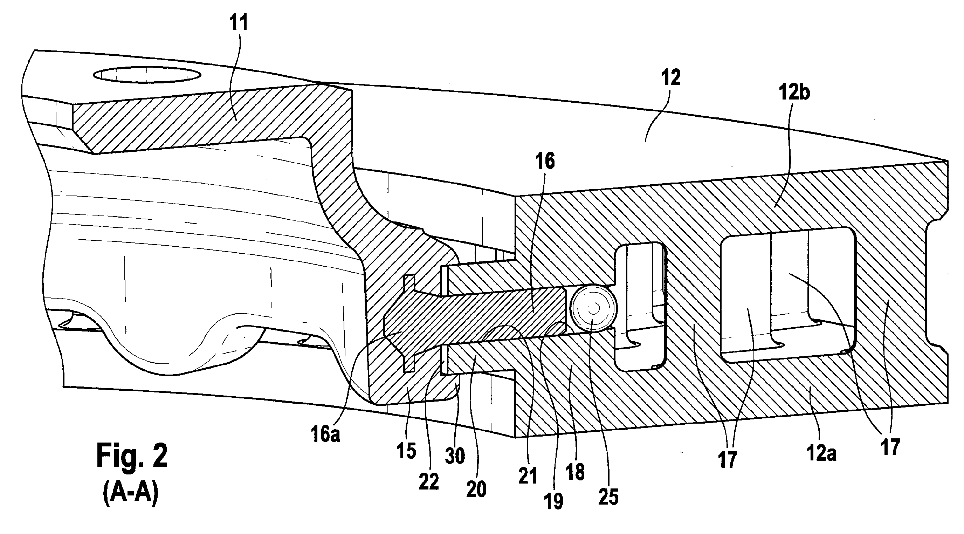

In der Figur 1 ist eine Bremsscheibe in Draufsicht dargestellt, Figur 2 zeigt eine perspektivische Darstellung, wie sie sich bei einem Teilschnitt A/A durch die Bremsscheibe nach Figur 1 ergeben würde.

### Beschreibung des Ausführungsbeispiels

In der Figur 1 ist mit 10 eine Bremsscheibe bezeichnet, die aus einem Scheibentopf 11 und einem Reibring 12 besteht. In bekannter Weise ist der Scheibentopf 11 in hier nicht dargestellter Weise auf eine Nabe eines Fahrzeugs befestigt, wobei die Schrauben zur Befestigung durch die Bohrungen 13 des Scheibentopfs 11 ragen. Über eine Vielzahl von in der Umfangswand 15 des Scheibentopfs 11 eingeformten Verbindungsgliedern in Form von Stiften 16 oder Bolzen oder dergleichen ist der Scheibentopf 11 mit dem Reibring 12 verbunden. Der Reibring 12 besteht aus zwei Reibringhälften 12a und 12b, welche durch eine Vielzahl von über den Umfang verteilten und insbesondere in radialer Richtung verlaufenden Stegen 17 miteinander verbunden sind, sodass eine belüftete Bremsscheibe entsteht. Abschnittsweise sind Trägerstege 18 im Bereich des inneren Umfangs des Reibrings 12 ausgebildet. Diese Trägerstege 18 weisen eine durchgehende Bohrung 19 zur Aufnahme der Stifte 16 auf. Es wären aber auch Sacklochbohrungen denkbar. Diese Bohrungen 19 sind in den Figuren in der Mittellängsachse des Reibrings 12 ausgebildet. Es wäre aber auch ein Versatz dieser Bohrungen 19 möglich. Die Trägerstege 18 weisen im Bereich der Bohrungen 19 zum Scheibentopf 11 hin ausgebildete Fortsätze 20 auf. Die Fortsätze 20 haben ebenfalls durchgehende Bohrungen 21, die mit den Bohrungen 19 fluchten. Zwischen der Stirnseite der Fortsätze 20 und dem Umfang des Scheibentopfs 11 ist ein kleiner Spalt 22 vorhanden. Der Reibring 12 besteht aus Gusseisen, während der Scheibentopf 11 aus Leichtmetall, insbesondere Aluminium oder Magnesium, besteht. Der Stift 16 ist aus Edelstahl, insbesondere nicht rostendem Edelstahl, hergestellt. Die Stifte 16 werden mit Hilfe einer Matrize kalibriert. Dabei wird entsprechend der Kalibrierung die Oberfläche des Stiftes mit einer geringen Eindringtiefe verdichtet und somit auch gehärtet. Aufgrund der bei der Kalibrierung erfolgten Bewegung hat der Stift 16 nur in seiner Längsrichtung, d. h. in seiner späteren Bewegungsrichtung in der Bohrung 19, eine durch die Kalibrierung entstehende längliche Oberflächenstruktur. Bei der Herstellung des Stiftes 16 können an seinem Ende Kalotten eingepresst werden. Wie in Figur 2 ersichtlich ist, hat die Kalibrierkugel 25 einen geringfügig größeren Durchmesser als die Bohrung 21 bzw. die Bohrung 19. Aufgrund ihres größeren Durchmessers erfolgt eine Verdichtung der Wandung der Bohrung 21 bzw. 19. Nach der jeweiligen Kalibrierkugel 25 werden die Stifte 16 in die Bohrungen 21 bzw. 19 eingesetzt und mit entsprechendem Druck in die Bohrungen 21 bzw. 19 eingeführt, sodass aufgrund der vor dem Stift 16 her geschobenen Kalibrierkugel 25 eine Kalibrierung der Wandung der Bohrung 21 bzw. 19 erfolgt. Ist die Bohrung 19 als durchgehende Bohrung ausgebildet, so kann bei entsprechender Länge des Stiftes 16 die Kalibrierkugel 25 am Ende der Bohrung 19 wieder aus dieser herausgeschoben werden und gegebenenfalls entfernt werden. Es wäre aber auch denkbar, ohne die Funktion der Bremsscheibe zu beeinflussen, dass bei einer Sacklochbohrung die Kalibrierkugel 25 in der Bohrung 19 verbleibt. Die Stirnseite des Stiftes 16 kann verschieden ausgebildet sein. Besonders vorteilhaft ist es, wenn sie als sogenannte "Kugelkalotte" ausgebildet ist, die mit der Form der Kalibrierkugel 25 korrespondiert. Dabei wird der Anpressdruck des Stiftes 16 auf die Kalibrierkugel 25 auf eine größere Fläche verteilt und die Verformung des der Kalibrierkugel 25 zugewandten Endes des Stiftes 16 wird vermieden. Die Stifte 16 verbleiben nach dem Kalibriervorgang in den Bohrungen 19, sodass anschließend der Scheibentopf 11 aufgegossen werden kann. Hierbei werden auch die Köpfe 16a der Stifte 16 mit in die Außenwand 15 des Scheibentopfs 11 eingegossen. Hierbei können die Fortsätze 20 auch zum Aufnehmen im Gießwerkzeug für den Scheibentopf 11 mit verwendet werden. Das Aufgießen erfolgt direkt auf die Stirnseiten der Fortsätze 20 des Reibrings 12. Beim Abkühlen des Scheibentopfs 11 entsteht nun der oben erwähnte Spalt 22. Er soll aber so gering wie möglich ausgebildet sein. Der Reibring 12 ist auf dem Scheibentopf 11 schwimmend gelagert ausgebildet. Dazu müssen die Stifte 16 in den Bohrungen 19 mit relativ geringem Spiel und somit wie oben ausgeführt mit möglichst geringer Toleranz angeordnet sein, sodass sich der Reibring 12 auf den Stiften 16 sowohl bei Raumtemperatur als auch bei Betriebstemperatur geringfügig bewegen kann. Dieser Toleranzbereich ist notwendig, da sich beim Bremsvorgang der Reibring 12 erwärmt und vom Scheibentopf 11 weg in radialer Richtung ausdehnt.

In der Figur 2 ist nun an der Außenwand 15 des Scheibentopfs 11 ein Überstand 30 ausgebildet, der den Fortsatz 20 radial umlaufend umgreift. Der Überstand 30 muss länger als der Spalt 22 sein, insbesondere muss er die durch die thermische Ausdehnung des Reibrings 12 hervorgerufene Spaltvergrößerung mit abdecken. D. h., bei jeder Situation soll der Überstand 30 den sich eventuell vergrößernden Spalt 22 überdecken, insbesondere abdecken. Da aber aufgrund der geringfügigen Relativbewegung zwischen Überstand 30 und Fortsatz 20 keine absolute Dichtheit möglich ist, befindet sich im Spalt 22 ein temperaturfestes Gleitmittel. Dadurch wird einerseits der Gleitprozess des Stifts 16 in der Bohrung 19 sichergestellt, und andererseits wird eine Korrosion durch eventuell in den Spalt 22 eindringendes Taumittel verhindert. Ohne aber vom Kern der Erfindung abzuweichen, wäre auch eine Ausbildung des Scheibentopfs 11 ohne dem Überstand 30 denkbar.

## Patentansprüche

1. Bremsscheibe (10), insbesondere belüftete Bremsscheibe, mit einem Reibring (12) und einem Tragteil (11), wobei am Umfang des Tragteils (11) mehrere in das Tragteil (11) eingeformte Verbindungsteile (16) vorhanden sind, wobei die Verbindungsteile (16) in Bohrungen (19) des Reibrings (12) ragen und wobei sich die Bohrungen (19) in Radialrichtung des Reibrings (12) erstrecken, **dadurch gekennzeichnet, dass** die Wandungen der Bohrungen (19) kalibriert und auf ihrer Oberfläche mit in der vorgenannten Radialrichtung, d.h. in Bewegungsrichtung der Verbindungsteile (16) verlaufenden Strukturen versehen sind.

2. Bremsscheibe nach Anspruch 1, **dadurch gekennzeichnet, dass** die Oberflächen der Verbindungsteile (16) kalibriert sind.

3. Bremsscheibe nach Anspruch 1 und/oder 2, **dadurch gekennzeichnet, dass** die Verbindungsteile (16) gleitend in den Bohrungen (19) gelagert sind.

4. Bremsscheibe nach einem der Ansprüche 1 bis 3, **dadurch gekennzeichnet, dass** die Bohrungen (19) Sacklochbohrungen sind und dass das Kalibrierungselement (25) sich zwischen Sacklochbohrungsgrund und Verbindungsteil (16) befindet.

5. Bremsscheibe nach einem der Ansprüche 1 bis 4, **dadurch gekennzeichnet, dass** das Ende des Verbindungsteils (16) und das Kalibrierungselement (25) zueinander korrespondierend ausgebildet ist.

6. Bremsscheibe nach einem der Ansprüche 1 bis 5, **dadurch gekennzeichnet, dass** das Ende des Verbindungsteils (16) kalottenförmig ausgebildet ist.

7. Bremsscheibe nach einem der Ansprüche 1 bis 6, **dadurch gekennzeichnet, dass** das Kalibrierungselement (25) eine Kugel ist.

8. Bremsscheibe nach einem der Ansprüche 1 bis 7, **dadurch gekennzeichnet, dass** am Reibring (12) Fortsätze (20) angegossen sind.

9. Bremsscheibe nach einem der Ansprüche 1 bis 8, **dadurch gekennzeichnet, dass** der Scheibentopf (11) aus Leichtmetall, insbesondere Aluminium, der Reibring (12) aus Gusseisen und die Verbindungsteile (16) aus Edelstahl bestehen.

10. Bremsscheibe nach einem der Ansprüche 1 bis 9, **dadurch gekennzeichnet, dass** das Verbindungsteil (16) ein Stift, Bolzen oder dergleichen ist.

## Claims

1. Brake disc (10), in particular ventilated brake disc, having a friction ring (12) and a carrying part (11), there being a plurality of connecting parts (16) which are moulded into the carrying part (11) on the circumference of the carrying part (11), the connecting parts (16) protruding into holes (19) of the friction ring (12), and the holes (19) extending in the radial direction of the friction ring (12), **characterized in that** the walls of the holes (19) are calibrated and are provided on their surface with structures which run in the abovementioned radial direction, that is to say in the direction of movement of the connecting parts (16).

2. Brake disc according to Claim 1, **characterized in that** the surfaces of the connecting parts (16) are calibrated.

3. Brake disc according to Claim 1 and/or 2, **characterized in that** the connecting parts (16) are mounted in the holes (19) in a sliding manner.

4. Brake disc according to one of Claims 1 to 3, **characterized in that** the holes (19) are blind holes, and **in that** the calibration element (25) is situated between the blind-hole bottom and the connecting part (16).

5. Brake disc according to one of Claims 1 to 4, **characterized in that** the end of the connecting part (16) and the calibration element (25) are configured so as to correspond to one another.

6. Brake disc according to one of Claims 1 to 5, **characterized in that** the end of the connecting part (16) is of dome-shaped configuration.

7. Brake disc according to one of Claims 1 to 6, **characterized in that** the calibration element (25) is a ball.

8. Brake disc according to one of Claims 1 to 7, **characterized in that** projections (20) are cast on the friction ring (12).

9. Brake disc according to one of Claims 1 to 8, **characterized in that** the disc pot (11) is composed of lightweight metal, in particular aluminium, the friction ring (12) is composed of cast iron and the connecting parts (16) are composed of stainless steel.

10. Brake disc according to one of Claims 1 to 9, **characterized in that** the connecting part (16) is a pin, bolt or the like.

## Revendications

1. Disque de frein (10), en particulier disque de frein ventilé, comprenant un anneau de friction (12) et une partie de support (11), plusieurs parties de liaison (16) moulées dans la partie de support (11) étant présentes sur la périphérie de la partie de support (11), les parties de liaison (16) faisant saillie dans des alésages (19) de l'anneau de friction (12), et les alésages (19) s'étendant dans la direction radiale de l'anneau de friction (12), **caractérisé en ce que** les parois des alésages (19) sont calibrées et sont pourvues sur leur surface de structures s'étendant dans ladite direction radiale, c'est-à-dire dans la direction de déplacement des parties de liaison (16).

2. Disque de frein selon la revendication 1, **caractérisé en ce que** les surfaces des parties de liaison (16) sont calibrées.

3. Disque de frein selon la revendication 1 et/ou 2, **caractérisé en ce que** les parties de liaison (16) sont montées à coulissement dans les alésages (19).

4. Disque de frein selon l'une quelconque des revendications 1 à 3, **caractérisé en ce que** les alésages (19) sont des alésages borgnes et **en ce que** l'élément de calibrage (25) se trouve entre le fond de l'alésage borgne et la partie de liaison (16).

5. Disque de frein selon l'une quelconque des revendications 1 à 4, **caractérisé en ce que** l'extrémité de la partie de liaison (16) et l'élément de calibrage (25) sont réalisés de manière à se correspondre l'un à l'autre.

6. Disque de frein selon l'une quelconque des revendications 1 à 5, **caractérisé en ce que** l'extrémité de la partie de liaison (16) est réalisée en forme de calotte.

7. Disque de frein selon l'une quelconque des revendications 1 à 6, **caractérisé en ce que** l'élément de calibrage (25) est une bille.

8. Disque de frein selon l'une quelconque des revendications 1 à 7, **caractérisé en ce que** des saillies (20) sont coulées sur l'anneau de friction (12).

9. Disque de frein selon l'une quelconque des revendications 1 à 8, **caractérisé en ce que** la nacelle de disque (11) est constituée de métal léger, en particulier d'aluminium, l'anneau de friction (12) est constitué de fonte de fer et les parties de liaison (16) sont constituées d'acier spécial.

10. Disque de frein selon l'une quelconque des revendications 1 à 9, **caractérisé en ce que** la partie de liaison (16) est une goupille, un boulon ou similaire.
